# EUROPEAN PATENT SPECIFICATION

(11) **EP 0 789 150 B1**
(45) Date of publication and mention of the grant of the patent: **13.11.2002**
(21) Application number: 96913537.5
(22) Date of filing: 30.04.1996
(51) Int. Cl.: F16C 1/26

(54) **SHEATH FOR CABLES AND FABRICATION PROCESS**
KABELHÜLLE UND VERFAHREN ZUR HERSTELLUNG
GAINE POUR CABLES ET SON PROCEDE DE FABRICATION

(30) Priority: 29.05.1995 ES 9501037
(43) Date of publication of application: 13.08.1997
(73) Proprietor: FICO CABLES, S.A., 08028 Barcelona (ES)
(72) Inventor: GABAS CEBOLLERO, Carlos, E-08029 Barcelona (ES)
(74) Representative: SUGRANES - VERDONCES - FERREGÜELA
(86) International application number: ES9600098
(87) International publication number: WO96038678

## Description

### Technical field of the invention

The object of the invention is a sheath for cables, which is applicable in general to control cables of the type made up of a steel cable provided with a sheath. More particularly, the sheath for cables object of the invention is applicable to cables of the type habitually used in the automobile industry; examples of such cables are, amongst others, the control cable which links the accelerator pedal with the vehicle's carburettor and the control cable which links the gearchange lever with the gearbox.

### Background of the invention

Known in the art are a large number of embodiments of control cables of the type mentioned above. Basically, such control cables are made up of a steel cable constituted by a plurality of wires wound helicoidally in concentric layers, and a sheath through which the steel cable can slide in both directions. The sheath of the steel cable generally includes a tubular conduit through the interior of which the steel cable is moved in both directions during operation of the control cable, on which is arranged coaxially a structural reinforcement layer and a tubular cover.

The structural reinforcement layer of the known embodiments of sheaths for control cables such as those described consists essentially:
- of a layer made up of one or more wires wound helicoidally in one or another direction on the tubular conduit, or
- of a layer made up of a strip wound helicoidally, in one or another direction, on the tubular conduit, or
- of a layer made up of the helicoidal winding, in one direction or another, of two correlatively arranged wires on the tubular conduit, one of which wires is profiled.

The aforesaid embodiments of structural reinforcement layers present, totally or partially, the following as their main disadvantages. Firstly, when the helicoidally wound layer works under traction the wires or strips of which it is made up tend to come away from each other, thereby altering the wound configuration, all of which, under certain conditions, affects the functional integrity of the control cable. And, secondly, the fact that the helicoidal winding, whether it be formed by wires or by strips, is implemented in a single direction of turning means that under certain working conditions, such as when the control cable is submitted to a turning torque in the opposite direction to that of the winding, the latter tends to expand and therefore markedly modifies the mechanical performance of the control cable.

Also known are embodiments of control cable sheath structural reinforcement layers basically made up of two sublayers of braided wires wound helicoidally in opposite directions, which provides a solution to the problems indicated above, since in the first place they work under suitable compression and traction conditions, and in the second place the helicoidal winding of said sublayers in opposite directions permits the structural reinforcement layer to work under suitable conditions when the control cable is submitted to turning torques in one or the other direction. The known embodiments of structural reinforcement layers based on two braided sublayers wound helicoidally in respective opposite directions has as its main disadvantage a very high production cost which derives largely from the slow turning speed of the machinery which braids the sublayers. In this respect, it may be noted that the turning speed of said machinery is on average of the order of 5 to 6 rpm (revolutions per minute), thereby necessarily involving a slow advance speed of the tubular conduit on which the sublayers of the structural reinforcement layer are wound.

The US Patent No. 3,230,979 discloses a high strength flexible conduit comprising an inner tubular element, a plurality of wires helicoidally wounded, which form a first layer superposed to said inner tubular member, two layers of wires, interwoven or superposed to each other, arranged on said first layer, and a cover obtained by extrusion of a plastic material so that the extruded material can flow between the interstices formed by the layers of wires, fixing them. This conduit has the main drawback of its high cost of production.

### Explanation of the invention

A sheath for control cables of new structure and functionality is made known in order to provide a solution for the aforesaid disadvantages presented by the known embodiments of control cable sheaths, which in short can be summed up as relatively poor mechanical performance, especially when working under traction or when subjected to turning torques, and/or high production costs.

Sheath for cables used in the automobile industry, habitually includes:
- a tubular conduit through which the steel cable of the control cable can slide in both directions;
- a first layer or interior layer made up of a plurality of wires wound in a coplanar fashion and helicoidally, concentrically with respect to the tubular conduit;
- a second layer or exterior layer made up of a plurality of wires wound in a coplanar fashion and helicoidally, concentrically with respect to the exterior layer and superposed to said interior layer;
- a tubular cover concentrically with respect to the exterior layer of wires.

The sheath for cables according to the invention is characterized in that it includes:
- a tubular core arranged between the tubular conduit and the interior layer of wires, the tubular conduit and the tubular core being concentrically and integrally coupled to each other, and the interior layer of wires being arranged on the tubular core, and in that:

- the tubular cover is superposed to the exterior layer of wires.

Another characteristic of the sheath for control cables of the invention consists of the fact that the tubular conduit is made from Teflon material, and that the core is made from polyamide material.

The aforesaid characteristics of the sheath for control cables of the invention provide a solution for the above-mentioned disadvantages presented by the known embodiments of cable sheaths whose structural reinforcement layer is made up of a single helicoidal winding, both in respect of deformations of the structural reinforcement layer when it is subjected to traction and when it is subjected to a turning torque in the opposite direction to that of the winding. Indeed, when the structural reinforcement layer of the sheath of the invention is subjected to traction the exterior layer prevents the coming apart of the wires which form the interior layer, thus maintaining the functional integrity of the sheath, while when it is subjected to a turning torque, in one or another direction, the reaction in an opposite direction of the corresponding layer, interior or exterior, prevents the expansion of the wires making up the other layer, thus maintaining said functional integrity.

Another advantage deriving from the characteristics of the sheath for cables of the invention consists of the fact that the tubular conduit has to withstand practically no load deriving from the windings of the interior and exterior layers. Indeed, the winding of the interior layer is implemented on a tubular core made of a material of high mechanical resistance to deformation and, as has been stated, the winding of the exterior layer is implemented on the interior layer; in this situation, all the mechanical loads deriving from implementation of the windings of both layers is exercised upon the tubular core, while the tubular conduit through which the steel cable of the control cable slides in both directions has to withstand practically no load deriving from said windings, thus remaining free from any possible deformation. This allows construction of the tubular conduit with materials which, indepedendently of their mechanical strength, offer, when the steel cable of the control cable is moved in one or another direction, a very low friction coefficient. The characteristic configuration of the sheath for control cables of the invention thus permits transmission of traction or compression forces through the steel cable of the control cable to take place practically without losses due to friction.

### Brief description of the drawings

The drawings sheets of the present specification show the sheath for control cables of the invention together with the process for its manufacturing. In said drawings:
Figure 1 is a longitudinal section view showing the arrangement of the interior layer of the sheath for control cables of the invention;
Figure 2 is a schematic representation of the cross section of the arrangement of the interior layer of the sheath for control cables of the invention;
Figure 3 is a longitudinal section view showing the arrangement of the exterior layer of the sheath for cables of the invention;
Figure 4 is a schematic representation of the cross section of the arrangement of the exterior layer of the sheath for cables of the invention;
Figure 5 is a longitudinal section view showing the sheath for control cables of the invention;
Figure 6 is a cross section view showing the sheath for control cables of the invention;
Figure 7 is a schematic representation of the process for the manufacturing of the sheath for control cables of the invention.

### Detailed description of the example of embodiment

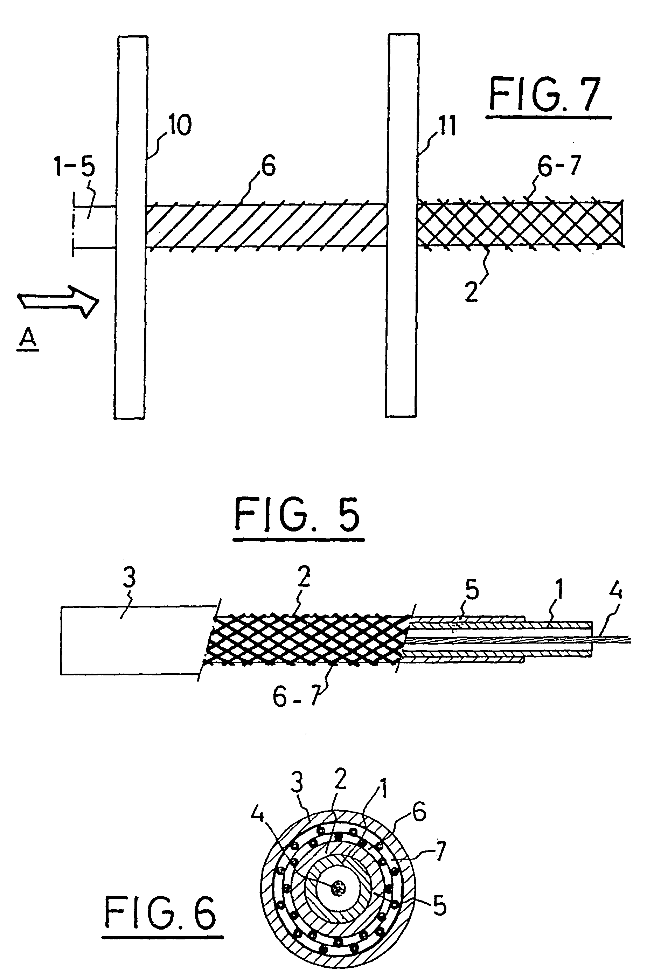

The sheath for control cables of the invention which is described as an example of embodiment comprises, as shown by Figures 5 and 6, a tubular conduit 1, a structural reinforcement 2 and a tubular cover 3. For the purposes of greater clarity of exposition, Figures 5 and 6 of the drawings sheets show a steel cable 4 which can be moved longitudinally in both directions through the tubular conduit 1; it is understood that said steel cable 4 is a not a part of the sheath of the invention, and that it has no role in the operations of the manufacturing process of the sheath described below.

Figures 5 and 6 show how the structural reinforcement 2 includes a tubular core 5, a first layer or interior layer 6 and a second layer or exterior layer 7.

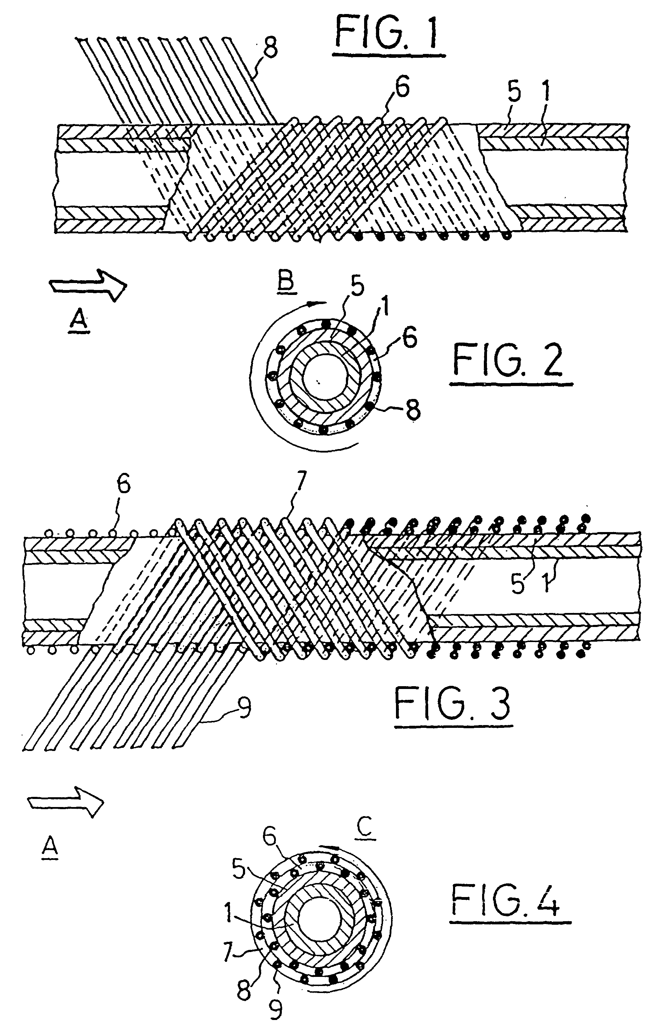

The tubular conduit 4 is preferably made from Teflon material, and, superimposed concentrically to the conduit 4, as shown in Figures 1 to 6, is the tubular core 5, preferably made from polyamide material, with both parts, tubular conduit 1 and core 5, being fitted together.

Figures 1, 2, 3 and 6 show in detail how the interior layer 6 is arranged concentrically on the tubular core 5 and consists of the helicoidal winding of a total of 8 equal wires, preferably of steel, parallel to each other, in which the gap between one and another adjacent one is kept constant and is the same in any case. It is understood that the number of wires 8 and the gap between same and screw pitch of the winding making up the interior layer 6 can be any suitable for each specific case of application, without this affecting the essential nature of the invention; the screw pitch of the winding is preferably 45°.

Figures 3, 4 and 6 show how the exterior layer 7 is arranged concentrically on the interior layer 6 and consists in the helicoidal winding of a total of eight equal wires 9, preferably of steel, parallel to each other, in which the gap between one and another adjacent one is kept constant and is the same in any case. Said Figures 3, 4 and 6 show details of how the winding of the exterior layer 7 is in the opposite direction to that of the winding of the interior layer 6 upon which it is totally superimposed. In a similar way to that stated above, it is understood that the number of wires 9 and the gap between same and the screw pitch of the winding can be any suitable for each specific case of application, without this affecting the essential nature of the invention; the screw pitch of the winding is preferably 45°.

Figures 5 and 6 show how the tubular cover 3 is superimposed upon the exterior layer 7, covering it totally. The tubular cover 3 is preferably made of polyamide material.

The process for the manufacturing of the sheath for control cables of the invention is described below by means of Figures 1 and 3 and the schematic representations of Figures 2, 4 and 7.

Figure 7 shows a schematic representation of a first coil-carrier and wire-guide support 10 and a second coil-carrier and wire-guide support 11. On the first support 10 are placed the reels from which there unwind the wires 8 of the interior layer 6, while on the second support 11 are placed the reels from which there unwind the wires 9 of the exterior layer 7. Both supports 10, 11 are set coaxially and can be rotated about their longitudinal axis in such a way that the rotation of the supports 10, 11 causes the unwinding of the respective wires 8, 9 and causes them to be guided in beam shape as shown in Figures 1 and 3 respectively.

In a first phase, not shown, the tubular conduit 1 and core 5 are coupled. In a second phase the tubular conduit 1 and core 5 are moved longitudinally in the direction indicated as A in Figures 1 and 7, passing coaxially through the first coil-carrier and wire-guide support 10 which is rotating in the clockwise direction indicated as B in Figure 2; thus the passage of the tubular conduit 1 and core 5 through the first support 10 causes the beam-shaped layout of wires 8 shown in Figure 1 to wind helicoidally onto the core 5 as shown in the figures of the drawings sheets, forming the interior layer 6. In a third phase, the conduit 1, the core 5 and the interior layer 6 in their longitudinal travel A pass coaxially through the second support 11 which is rotating in the opposite direction to that of the first support 10, and specifically the second support 11 is rotating in the counterclockwise direction indicated as C in Figure 4; thus the passage of the conduit 1, the core 5 and the interior layer 6 through the second support 11 causes the beam-shaped arrangement of wires 9 shown in Figure 3 to be wound helicoidally on the interior layer 6 in a direction opposite to the winding of the latter, forming the exterior layer 7 shown in Figures 3 to 7. In a third phase, not shown, the tubular cover 3 is coupled, leaving the sheath for control cables of the invention in the service conditions envisaged.

## Claims

1. Sheath for cables habitually used in the automobile industry, including:
- a tubular conduit (1) through which the steel cable (4) of the control cable can slide in both directions;
- a first layer or interior layer (6) made up of a plurality of wires (8) wound in a coplanar fashion and helicoidally, concentrically with respect to the tubular conduit (1) ;
- a second layer or exterior layer (7) made up of a plurality of wires (9) wound in a coplanar fashion and helicoidally, concentrically with respect to the exterior layer (6) and superposed to said interior layer (6);
- a tubular cover (3) concentrically with respect to the exterior layer (7) of wires (9);
**characterized in that** it includes:
- a tubular core (5) arranged between the tubular conduit (1) and the interior layer (6) of wires (8), the tubular conduit (1) and the tubular core (5) being concentrically and integrally coupled to each other, and the interior layer (6) of wires (8) being arranged on the tubular core (5), and **in that**:
- the tubular cover (3) is superposed to the exterior layer (7) of wires (9).

2. A sheath for cables, as claimed in Claim 1, **characterized in that** the tubular conduit (1) is made from Teflon material , and **in that** the tubular core (5) is made from polyamide material.

## Patentansprüche

1. Hülle für Kabel, wie sie für gewöhnlich in der Automobilindustrie verwendet werden, mit:
- einem rohrförmigen Kanal (1), durch den das Stahlkabel (4) des Steuerkabels in beiden Richtungen gleiten kann;
- einer ersten oder inneren Schicht (6) aus einer Anzahl von Drähten (8), die auf koplanare Weise und schraubenförmig, konzentrisch in Bezug auf den rohrförmigen Kanal (1), aufgewunden sind;
- einer zweiten oder äußeren Schicht (7) aus einer Anzahl von Drähten (9), die auf koplanare Weise und schraubenförmig, konzentrisch in Bezug auf die äußere Schicht (7), aufgewunden sind und die auf die innere Schicht (6) aufgebracht sind;
- einer rohrförmigen Abdeckung (3), die konzentrisch in Bezug auf die äußere Schicht (7) von Drähten (9) ist;
**gekennzeichnet durch**
- einen rohrförmigen Kern (5), der zwischen dem rohrförmigen Kanal (1) und der inneren Schicht (6) von Drähten (8) angeordnet ist, wobei der rohrförmige Kanal (1) und der rohrförmige Kern (5) konzentrisch und einstückig miteinander verbunden sind und die innere Schicht (6) von Drähten (8) auf dem rohrförmigen Kern (5) angeordnet ist;
- wobei die rohrförmige Abdeckung (3) auf die äußere Schicht (7) von Drähten (9) aufgebracht ist.

2. Hülle für Steuerkabel nach Anspruch 1, **dadurch gekennzeichnet, dass** der rohrförmige Kanal (1) aus dem Material Teflon besteht und dass der Rohrkern (5) aus dem Material Polyamid besteht.

## Revendications

1. Gaine pour câbles habituellement utilisés dans l'industrie automobile, comprenant :
- un conduit tubulaire (1) au travers duquel le câble d'acier (4) du câble de contrôle peut coulisser dans les deux directions ;
- une première couche ou couche intérieure (6) constituée d'une pluralité de fils (8) enroulés de façon coplanaire et hélicoïdalement, concentriquement par rapport au conduit tubulaire (1) ;
- une seconde couche ou couche extérieure (7) constituée d'une pluralité de fils (9) enroulés de façon coplanaire et hélicoïdalement, concentriquement par rapport à la couche extérieure (6) et superposés à ladite couche intérieure (6) ;
- un recouvrement tubulaire (3) concentrique par rapport à la couche extérieure (7) des fils (9) ;
**caractérisé en ce qu'**il comprend :
- une âme tubulaire (5) disposée entre le conduit tubulaire (1) et la couche intérieure (6) des fils (8), le conduit tubulaire (1) et l'âme tubulaire (5) étant couplés concentriquement et solidairement l'un à l'autre, et la couche intérieure (6) de fils (8) étant disposée sur l'âme tubulaire (5),
et **en ce que** :
- le recouvrement tubulaire (3) est superposé à la couche extérieure (7) de fils (9).

2. Gaine pour câbles de contrôle selon la revendication 1, carcaterisée en ce que le conduit tubulaire (1) est realisé en Teflón et que l'âme tubulaire est realisée en materiau polyamide.
